(19) **Europäisches Patentamt**
**European Patent Office**
**Office européen des brevets**

(11) **EP 1 787 383 B1**

(12) **EUROPEAN PATENT SPECIFICATION**

(45) Date of publication and mention
of the grant of the patent:
**14.01.2009 Bulletin 2009/03**

(51) Int Cl.:
**H02M 7/162** (2006.01)

(21) Application number: **05786967.9**

(86) International application number:
**PCT/EP2005/054454**

(22) Date of filing: **08.09.2005**

(87) International publication number:
**WO 2006/027376 (16.03.2006 Gazette 2006/11)**

(54) **CONVERTIBLE HIGH VOLTAGE DIRECT CURRENT INSTALLATION**

UMWANDELBARE HOCHSPANNUNGSGLEICHSTROMINSTALLATION

INSTALLATION DE COURANT CONTINU HAUTE TENSION CONVERTIBLE

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.09.2004 GB 0420090**

(43) Date of publication of application:
**23.05.2007 Bulletin 2007/21**

(73) Proprietor: **Areva T&D UK Limited**
**Stafford ST17 4LN (GB)**

(72) Inventor: **DAVIDSON, Colin Charnock**
**STAFFORD ST17 OJZ (GB)**

(74) Representative: **Poulin, Gérard et al**
**Brevalex**
**3, rue du Docteur Lancereaux**
**75008 Paris (FR)**

(56) References cited:
**US-B1- 6 411 067**

- **CLARK G R ET AL: "POWER ELECTRONICS IN HIGH VOLTAGE TRANSMISSION SYSTEMS" 1 December 1992 (1992-12-01), REVUE GENERALE DE L'ELECTRICITE, RGE. PARIS, FR, PAGE(S) 102-107 , XP000328986 ISSN: 0035-3116 page 102 - page 104; figures 3,4**
- **GIBSON H ET AL: "The development of high power thyristors for power system applications" 1988, , PAGE(S) 4-1 , XP006526200 page 3**

**Description**

The present invention relates to a high voltage direct current (HVDC) installation which is convertible to operate as a static var compensator (SVC) where power losses during operation in SVC mode are minimized.

High voltage direct current (HVDC) installations are commonly employed in high power transmission networks to convert AC power to DC power for transmission via overhead lines and/or under-sea cables. This conversion reduces the cost per kilometer of the lines and/or cables, and thus becomes cost-effective when power needs to be transmitted over a long distance.

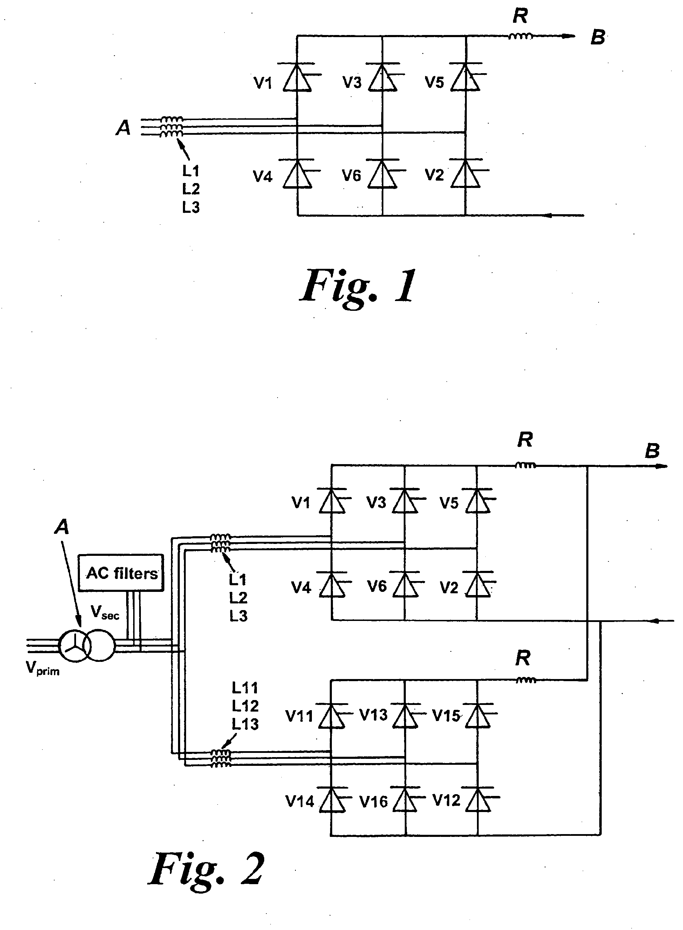

The basic component of an HVDC installation is a three-phase, six-pulse "Graetz" bridge, as shown in Figure 1. The bridge includes six switching arms or "valves" V1-V6, the valves conventionally being numbered in the order in which they are turned-on or "fired".

Each valve includes a plurality of thyristors connected in series. The number of thyristor levels depends on the operating voltage of the HVDC installation, and can range from 10-100. Typically, for an HVDC installation operating at 100kV, each valve includes 20 thyristor levels.

The AC input of the bridge A is connected to an AC system via inductors or reactors L1-L3, which are often (although not necessarily) provided by the leakage inductance of a step-down transformer.

The DC output of the bridge B is connected to a DC transmission system (e.g. an overhead line or an under-sea cable) via a DC smoothing reactor R.

It is possible to control the DC voltage and current output from the bridge by varying the turn-on delay angle, or "firing angle", $\alpha$ of the thyristor valves.

The time delay, $\alpha$, represents the period between the point at which the voltage across the thyristors becomes positive and the point at which the thyristors are turned-on. For typical "rectifier" operation (DC power being exported from the converter) $\alpha$ is about 15°, which means that each thyristor valve is turned on 15 electrical degrees after the voltage across it becomes positive.

As $\alpha$ increases, the mean DC output voltage falls until, at about $\alpha = 90°$, it becomes zero and no real power is transmitted.

Provided the AC system includes rotating electrical machines (generators) having inertia, $\alpha$ can be increased still further so that the mean DC output voltage becomes negative and the converter enters "inverter" mode where power is imported from the DC system and inverted into the AC system. For typical "inverter" operation, $\alpha$ is about 150°.

While the circuit operation in rectifier mode is explained with reference to the turn-on delay angle $\alpha$, the circuit operation in inverter mode is more usually explained with reference to the extinction angle $\gamma$.

The extinction angle, $\gamma$, represents the period between the point at which the valve turns off and the point when it once more experiences a positive voltage.

$\gamma$ is defined as $\gamma = 180° - \alpha - u$, where "u" is the overlap angle, the period between the turn-on of an incoming valve and the turn-off of the out-going valve. Typically, u is about 15°. Hence $\gamma$ is also typically about 15°.

A conventional HVDC installation includes at least one six-pulse bridge acting as a rectifier and another acting as an inverter, and may include two or more bridges connected in series and fed by different windings of a step-down transformer so that a 30° phase shift is introduced between the two bridges. This is referred to as a twelve-pulse circuit, and has a reduced harmonic spectrum compared to a six-pulse circuit.

Modern HVDC installations are capable of operating at DC currents of 4000A; which is usually more than sufficient for most practical applications. However, in circumstances where DC current substantially higher than 4000A is required, two bridges may be connected in parallel instead of in series, as shown in Figure 2. The circuit is thus a double-six-pulse circuit rather than a twelve-pulse circuit.

The rectifier and inverter are operated in closed-loop control, normally with the rectifier controlling the DC current and the inverter controlling the DC voltage.

Whilst the primary application of line-commutated thyristor converters is in the transmission of real power (MW), they can also be used to absorb considerable amounts of reactive power (MVAr). For example, in a normal HVDC installation optimized for transmission of real power, the converter typically operates at a power factor of about 0.85 (lagging). This means that for every MW of real power transmitted, reactive power equal to:

$$\tan (\text{acos } 0.85) = 0.62 \text{ MVAr}$$

is absorbed.

While it is very difficult to operate at a higher power factor than this, it is, in principle, relatively easy to operate at a lower power factor by making $\alpha$ closer to 90°. At $\alpha = 90°$, the power factor becomes zero.

This means that, provided it is rated adequately, an HVDC converter can be used as a thyristor controlled reactor (TCR) absorbing a variable amount of reactive power whilst at the same time continuing to transmit a variable amount of real power.

The absorption of reactive power was previously considered an undesirable side effect, almost all HVDC installations including shunt capacitor banks on the AC side (normally configured as AC harmonic filters) to offset the reactive power absorbed by the HVDC converter. However, it is becoming increasing desirable to produce an HVDC installation that is convertible for use as a static var compensator (SVC) or an HVDC converter, depending on circumstances.

An SVC may include a thyristor controlled reactor (TCR) to absorb reactive power and a thyristor switched capacitor (TSC) to provide a capacitive reactive power input, and is generally located in an AC power transmission network to balance reactive power and hence control the AC voltage of the network.

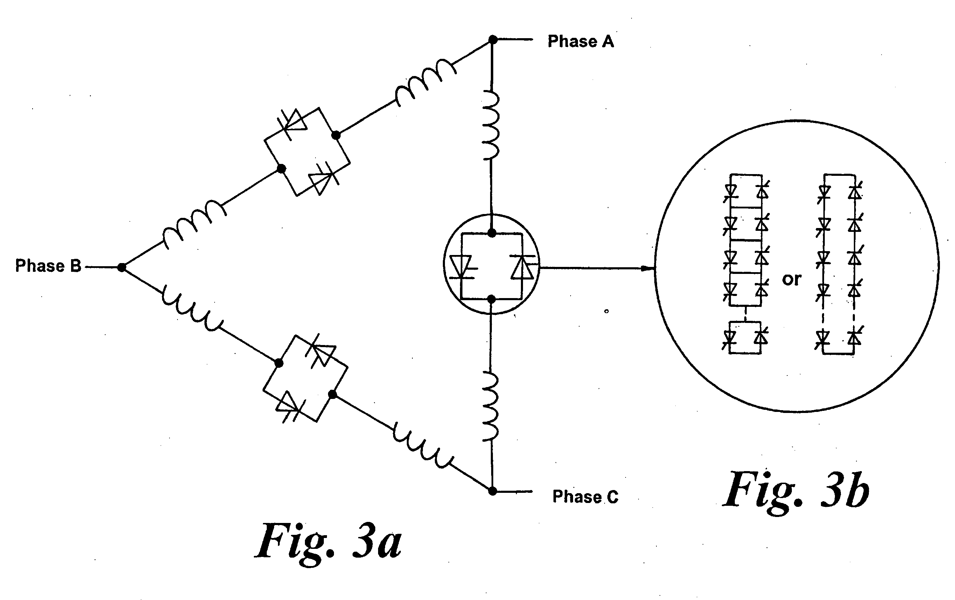

In a conventional TCR installation, as shown in Figure 3a, the current flowing through the shunt-connected inductor banks is adjusted by varying the delay angle $\alpha$.

A delay angle $\alpha$ of 90° gives rise to the highest current (V/(2nfL), where V is the applied voltage and L is the total inductance), whereas a delay angle $\alpha$ of 180° gives no current.

The total amount of reactive power absorbed per phase is given by the product of the rms voltage and the fundamental component of current. The TCR inductors are generally sized so that the maximum continuous current is between 70% and 95% of the current obtained at $\alpha = 90°$.

While thyristor valves for HVDC installations are unidirectional, those for SVC applications such as the TCR have to be able to conduct in both directions.

The switching elements themselves (the thyristors) can only conduct in one direction. Consequently, thyristor valves for SVC applications consist of thyristors connected both in series and inverse-parallel. Inverse-parallel connections may be made at both ends of the thyristor stacks or, more usually, at each thyristor. Both alternatives are shown in Figure 3b.

The usual configuration of a TCR is to connect each bidirectional thyristor valve between the two valves of the shunt reactor whose current the valves are controlling. In this way, the delicate thyristor valves are shielded from high-frequency transients occurring on the AC system and a fault current in the event of an insulation failure of one half of the reactor.

The three phases of the TCR are connected line-to-line in a "Delta" formation because, at least in theory, this cancels out all "triplen" harmonics (i.e. 3rd, 6th , 9th etc.).

As indicated earlier, there is an increasing demand for HVDC installations that can operate in an HVDC mode, when required, and are convertible to operate in an SVC mode for the rest of the time.

For example, an HVDC installation of this type is particularly desirable in the St Lawrence Valley of Quebec, which is prone to unusual weather patterns. In this region, problems can occur when relatively warm, damp, air builds up after a prolonged period of freezing temperatures. The warm, damp, air leads to rain which freezes on contact with the ground, houses, trees, power transmission lines etc. The weight of ice on overhead power transmission lines (sometimes several cm thick) can cause the lines and supporting towers to collapse, leading to failure of the powder transmission network. This problem can be addressed by an HVDC installation that can inject a controlled DC current into a transmission line that is otherwise used for AC transmission. The heating effect of the current causes the ice to melt and fall off the transmission line, after which the transmission line can be returned to normal service in transmitting AC power. In order to achieve the "de-icing" effect, the HVDC installation should preferably be arranged to supply a voltage adjustable from 2kV to 41.6kV, and a DC current adjustable in the range 3600-7200A, according to the type and length of transmission line to be de-iced.

Since such climatic conditions are a relatively rare occurrence, it is advantageous if the HVDC installation can be converted to operate in an SVC mode for the rest of the time. In SVC mode, reactive power exchange preferably needs to be kept within +250/-125MVAr.

Convertible HVDC installations may also be used in other circumstances requiring a DC current sufficiently high that it requires two or more bridges in parallel, and are particularly attractive if the MVAr rating needed in SVC mode is about the same as the MW rating in HVDC mode (or real power mode).

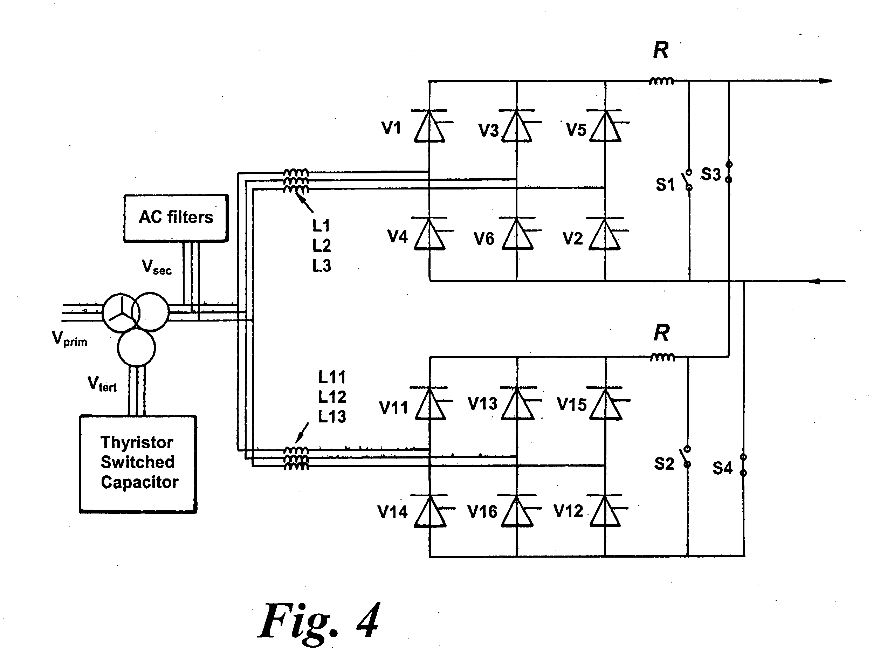

It is possible to reconfigure a double-six-pulse HVDC installation to act in SVC mode by opening or closing various switches on the DC side of the installation in order to short-circuit the DC terminals of each six-pulse bridge and open other switches to isolate the DC line from the bridge, as shown in Figure 4.

In the arrangement shown in Figure 4, the step-down transformer includes a secondary winding, which provides the connection voltage in HVDC mode, and a tertiary winding, which provides the connection voltage in SVC mode. The provision of a tertiary winding makes it possible to provide a smaller connection voltage in SVC mode, and also provides means for connecting a thyristor switched capacitor (TSC) to the installation to provide rapidly switchable capacitive reactive power output, if required.

The provision of a smaller connection voltage in SVC mode provides an effective means for increasing the per-unit reactance of the reactors L1-L3 in SVC mode.

Depending on how quickly and frequently the mode transfer needs to be made, the switches could be semiconductor switches, circuit breakers, disconnectors or even sections of busbar that are removed and refitted.

In the arrangement shown in Figure 4, switches S1/S2 are open and switches S3/S4 are closed in the HVDC mode. In the SVC mode, switches S1/S2 are closed and switches S3/S4 are open.

The shorting of the DC terminals of the bridge can take place to the right or the left of the DC smoothing reactor R. When the DC terminals are shorted to the left of the smoothing reactor R, the reactor R is excluded from the circuit such that the circuit is effectively a standard TCR connected in a "Star" configuration instead of a Delta configuration. Either way, the circuit needs to be operated at a delay angle, $\alpha$, slightly above 90°.

However, operation of an HVDC valve at $\alpha = 90°$ is stressful for the thyristors and other components, and leads to very high power losses, even with only one of the two bridges operating in circumstances where it is possible to absorb enough reactive power with only one bridge.

This is undesirable. Electricity utility companies place a high value on the efficiency of equipment because power losses represent lost revenue. Suppliers are therefore often penalized by "loss evaluation factors", typically measured in thousands of $ per kW.

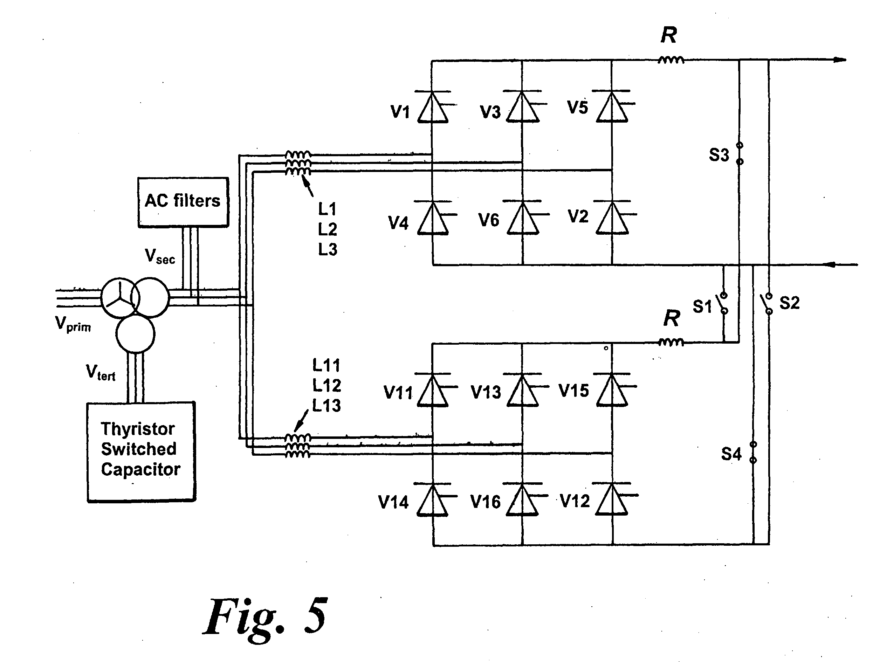

An alternative arrangement is to run the two HVDC bridges as a back-to-back converter, using one as a rectifier and the other as an inverter, as shown in Figure 5. In this arrangement, switches S1/S2 are open and switches S3/S4 are closed in the HVDC mode. In the SVC mode, switches S1/S2 are closed and switches S3/S4 are open.

In SVC mode, real power simply circulates around the two bridges, and both bridges absorb reactive power.

An advantage of this arrangement is that both bridges can be operated with control angles (delay angle, $\alpha$, of the rectifier and extinction angle, $\gamma$, of the inverter) near the normal range of 15-20°. The total losses are therefore lower than for the circuit shown in Figure 4. However, the losses are still too high to make the arrangement economically viable for use in a high power transmission network.

Several factors influence the high losses.

One is that too many thyristor levels are involved for the amount of reactive power absorption needed to meet the SVC requirements outlined above. Typically, an installation designed to meet the HVDC capabilities outlined above (a voltage adjustable from 2kV to 41.6kV, and DC current adjustable in the range 3600-7200A) would include 240 thyristor levels of 8.5kV/5" thyristors, whereas a purpose-built 200MVAr TCR would only need 25-30, thyristor levels (50-60 thyristors) of the same thyristor type.

Another factor is that, in an installation designed to meet the HVDC capabilities outlined above, the AC series reactors are necessarily small in per-unit terms (typically 0.15-0.20 pu) so that the "overlap angle" does not become excessive. This means that the current obtained at $\alpha = 90°$, when feeding into a short circuit, is much greater than the continuous rated current. Consequently the rate of change of current (di/dt) at valve turn-on and turn-off is high and leads to high switching losses.

The HVDC and SVC requirements outlined above make these factors particularly severe since the amount of inductive MVAr the installation needs to absorb in SVC mode is much smaller than the converters are inherently capable of.

Accordingly, it is an aim of the invention to provide an HVDC installation that can be converted to operate in an SVC mode such that losses in the SVC mode are minimized.

According to an aspect of the invention there is provided a high voltage direct current (HVDC) installation operable as an HVDC converter and convertible to operate as a static var compensator (SVC), the installation comprising an AC input; a DC output; first and second Graetz bridges connected in parallel between the AC input and the DC output such that all of the thyristor levels of the bridges are utilized; a switch circuit operable to disconnect the DC output such that one or both of the bridges forms a thyristor controlled reactor (TCR) and a reduced number of the thyristor levels of the bridges are utilized; and means to reduce the size of the input voltage provided by the AC input when the DC output is disconnected.

According to another aspect of the invention there is provided a method of converting a high voltage direct current (HVDC) installation to operate as a static var compensator (SVC), the HVDC installation including first and second Graetz bridges connected in parallel between an AC input and a DC output such that all of the thyristor levels of the bridges are utilized, comprising the steps of:

(i) disconnecting the DC output such that one or both of the bridges forms a thyristor controlled reactor (TCR) utilizing a reduced number of thyristor levels of the bridges; and
(ii) reducing the size of the input voltage provided by the AC input.

Other advantageous features are described in dependent Claims 2-9 and 10-17.

Embodiments of the invention will now be described, by way of non-limiting examples, with reference to the accompanying drawings in which:

Figure 1 illustrates the structure of a three-phase, six-pulse, Graetz bridge;

Figure 2 illustrates the structure of a high voltage direct current (HVDC) installation;

Figures 3a and 3b illustrate the structure of a standard thyristor controlled reactor (TCR);

Figures 4 and 5 illustrate structures of HVDC installations convertible to operate as static var compensators (SVC);

Figure 6 illustrates the structure of an HVDC installation convertible to operate as an SVC in accordance with an embodiment of the invention;

Figure 7 illustrates the structure of an HVDC installation convertible to operate as an SVC in accordance with another embodiment of the invention;

Figures 8 and 9 illustrate the structure of an HVDC installation convertible to operate as an SVC in accordance with a further embodiment of the invention;

Figures 10-12 illustrate the structure of an HVDC installation convertible to operate as an SVC in accordance with a yet further embodiment of the invention; and

Figure 13 illustrates the structure of the SVC mode of an HVDC installation convertible to operate as an SVC in accordance with a still further embodiment of the invention.

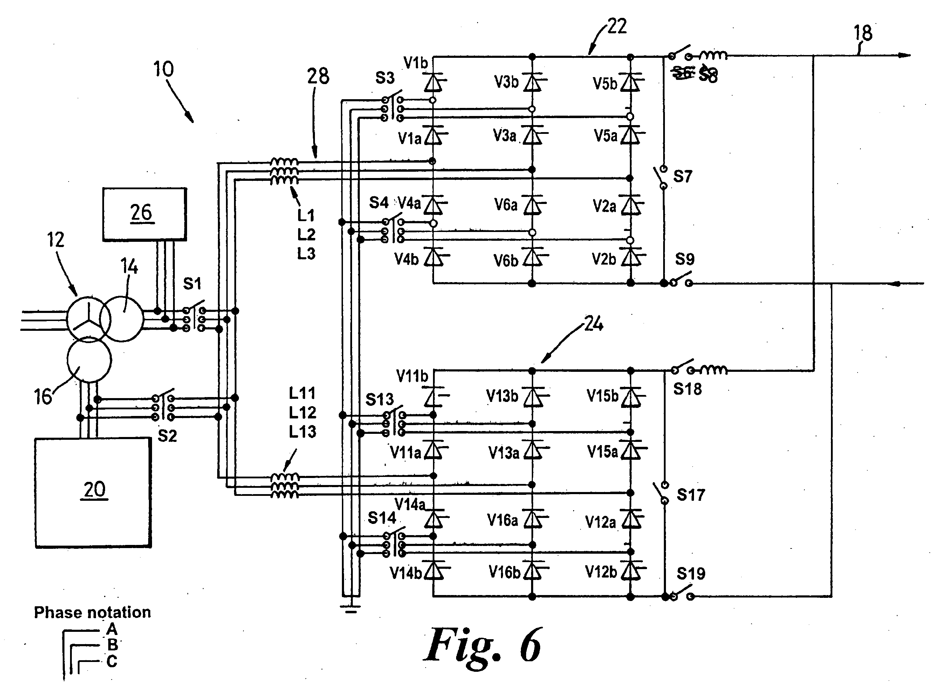

An HVDC installation 10 according to an embodiment of the invention is shown in Figure 6.

The HVDC installation 10 includes an AC input in the form of a step-down transformer 12 having secondary and tertiary windings 14,16, and a DC output in the form of a DC busbar 18. The tertiary winding 16 provides a smaller voltage than the secondary winding 14 and, in one particular embodiment, the tertiary winding 16 provides an input voltage of 20kV while the secondary winding 14 provides an input voltage of 46kV.

A thyristor switched capacitor (TSC) 20 is connected to the tertiary winding 14 of the step-down transformer 12 and first and second three-phase, six-pulse Graetz bridges 22,24 are connected in parallel between the secondary winding 14 of the step-down transformer 12, via reactors L1-L3 and L11-L13, and the DC busbar 18.

In the embodiment shown in Figure 4, AC filters 26 in the form of shunt capacitor banks are connected between each phase of the secondary winding 14 and earth. In other embodiments, the AC filters 26 may be omitted.

The HVDC installation 10 further includes a switch circuit 28 including switches S1-S4, S7-S9, S13, S14 and S17-S19 and operable to disconnect the bridges 22,24 from the secondary winding 14 of the step-down transformer 12, connect the bridges to the tertiary winding 16 of the step-down transformer 12 and open the DC busbar 18 such that one or both of the bridges 22,24 forms a thyristor controlled reactor (TCR).

Each of the thyristor valves $V_1$-$V_6$, $V_{11}$-$V_{16}$ of the bridges 22,24 is sub-divided into inner and outer halves $V_{1a}$, $V_{2a}$..., $V_{1b}$, $V_{2b}$... . In the embodiment shown in Figure 6, each of the valves $V_1$-$V_6$,$V_{11}$-$V_{16}$ is sub-divided at its midpoint however, in other embodiments, each of the valves $V_1$-$V_6$, $V_{11}$-$V_{16}$ may be divided at other positions.

In real power mode, switches S1, S8, S9, S18 and S19 of the switch circuit 28 are closed and all the other switches are open giving rise to the classic HVDC converter topology where the bridges 22,24 are connected in parallel between the secondary winding 14 of the step-down transformer 12 and the DC busbar 18.

In SVC mode, switch S1 is open and switch S2 is closed connecting the bridges 22,24 to the tertiary winding 16 of the step-down transformer 12 via reactors L1-L3 and L11-L13. Switches S3, S4, S13 and S14 are also closed connecting the midpoints of the valves $V_1$-$V_6$, $V_{11}$-$V_{16}$ to the earth so that the tertiary voltage is applied across the inner halves $V_{1a}$-$V_{6a}$, $V_{11a}$-$V_{16a}$ of the thyristor valves $V_1$-$V_6$,$V_{11}$-$V_{16}$.

Earthing the outer halves $V_{1b}$-$V_{6b}$, $V_{11b}$-$U_{16b}$ of the thyristor valves $V_1$-$V_6$, $V_{11}$-$V_{16}$ at both ends serves to isolate the outer halves $V_{1b}$-$V_{6b}$, $V_{11b}$-$V_{16b}$ so that they do not experience any voltage.

Switches S7 and S17 are closed to short together the DC terminals of the bridges 22,24 and ensure secure earthing, while switches S8, S9, S18 and S19 are opened to disconnect the DC terminals of the bridges 22,24 from the DC busbar and thereby isolate the DC equipment from the bridges 22,24.

In the SVC mode, the bridges 22,24 effectively form a pair of star-connected thyristor controlled reactors (TCR) to absorb reactive power utilizing a reduced number of thyristor levels, and the TSC provides a means to provide capacitive reactive power output.

The reduction in connection voltage between the secondary winding 14 and the tertiary winding 16 leads to a much larger per-unit reactance of the series reactors L1-L3 and L11-L13 since for a given inductance, the per-unit reactance is proportional to $1/V^2$. This means that a series reactor with a per-unit inductance of 15% at 46kV becomes a reactor with a per-unit inductance of 79% at 20kV. This coupled with a reduced connection voltage and a reduced number of thyristor levels means that the valve losses are substantially reduced compared to the arrangement shown in Figure 5.

The circuit shown in Figure 6 is versatile in that one or both of the converters can be used as TCRs, depending on the required reactive power (MVAr) rating.

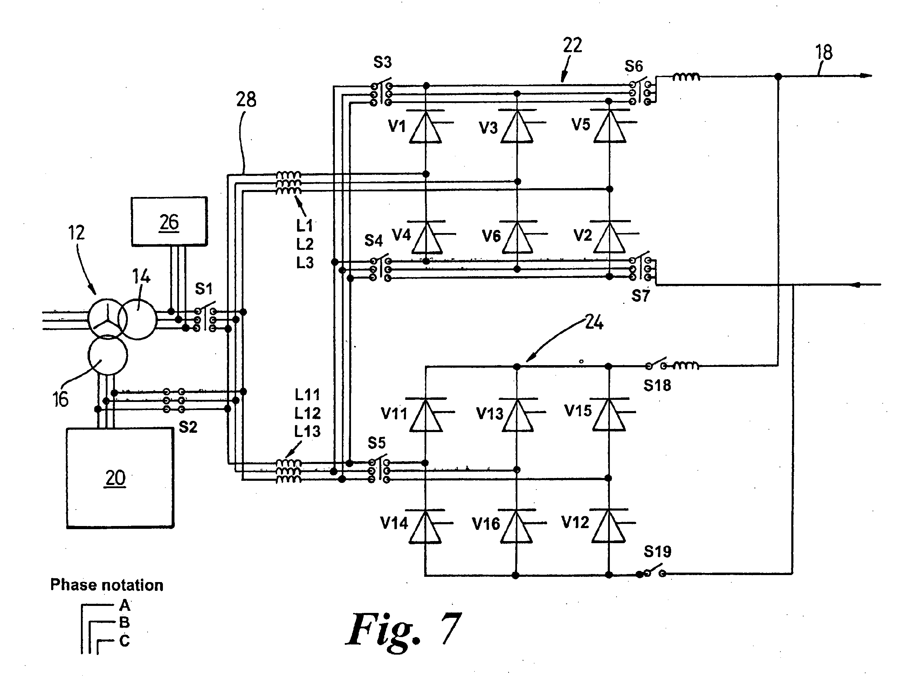

However, one disadvantage of this embodiment of the invention is that any TCR connected in star generates large amounts of triplen harmonics, which are not cancelled as they are with a delta connection. To resolve this, the valves $V_1$-$V_6$,$V_{11}$-$V_{16}$ need to be connected in delta. One way of doing this is shown in Figure 7, which illustrates an HVDC installation according to another embodiment of the invention.

In the embodiment shown in Figure 7, bridges 22,24 are connected in parallel between the secondary winding 14 of the step-down transformer 12 and the DC busbar 18, via AC filters 36 and reactors L1-L3 and L11-L13, as in the previous embodiment.

The switch circuit 28 includes switches S1-S7, S18 and S19 operable to disconnect the bridges 22,24 from the secondary winding 14 of the step-down transformer 12, connect the bridges to the tertiary winding 16 of the step-down transformer 12 and open the DC busbar 18.

In this embodiment, the valves $V_1$-$V_6$,$V_{11}$-$V_{16}$ of each bridge 22,24 are not sub-divided.

In real power mode, switches S1, S5-S7, S18 and S19 are closed and all the other switches are open to provide the standard HVDC circuit.

In SVC mode, switch S1 is opened and switch S2 is closed connecting the bridges 22,24 to the tertiary winding 16 of the step-down transformer 12 (via inductors L1-L3 and L11-L13). However, switches S5, S18 and S19 are also opened to isolate the second bridge 24 from the tertiary winding 16.

Switches S6 and S7 are opened to disconnect the bridges 22,24 from the DC busbar 18 and switches S3 and S4 are closed connecting the valves $V_1$-$V_6$ of the first bridge 22 to the AC connections of the second bridge 24 so forming a delta-connected TCR utilizing all of the thyristor levels of the valves $V_1$-$V_6$ in the first bridge 22 and all six AC reactors L1-L3 and L11-L13.

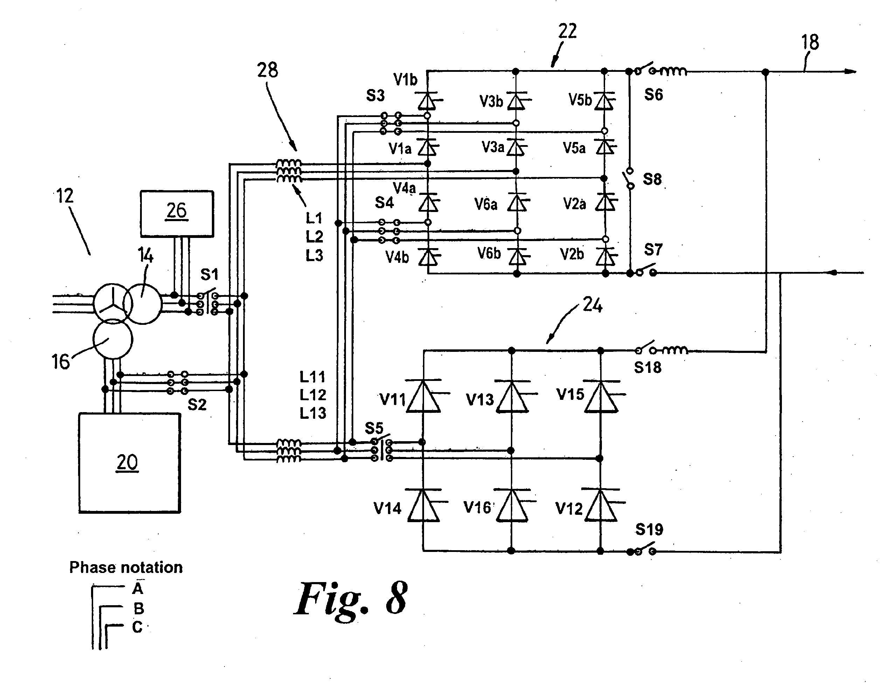

In order to reduce power losses still further, the arrangement shown in Figure 7 may be modified as shown in Figure 8 in order to further reduce the number of thyristor levels utilized in SVC mode.

In the embodiment shown in Figure 8, each of the valves $V_1$-$V_6$ in the first bridge 22 is sub-divided at its mid-point to create inner and outer halves $V_{1a}$-$V_{6a}$, $V_{1b}$-$V_{6b}$. As in the embodiment shown in Figure 6, each of the valves $V_1$-$V_6$ is sub-divided at its midpoint. However, in other embodiments each of the valves $V_1$-$V_6$ may be divided at other positions.

An additional switch S8 is also introduced into the switch circuit 28 between the DC terminals of the first bridge 22.

In real power mode, switches S1, S5-S7, S18 and S19 are closed and all the other switches are open to provide the standard HVDC circuit.

In SVC mode, switch S1 is opened and switch S2 is closed connecting the bridges 22,24 to the tertiary winding 16 of the step-down transformer 12 (via inductors L1-L3 and L11-L13). However, switches S5, S18 and S19 are also opened to isolate the second bridge 24 from the tertiary winding 16.

Switch S8 is opened to short together the DC terminals of the first bridge 22 and switches S6 and S7 are opened to disconnect the bridges 22,24 from the DC busbar 18 and thereby isolate the DC equipment from the bridges 22,24

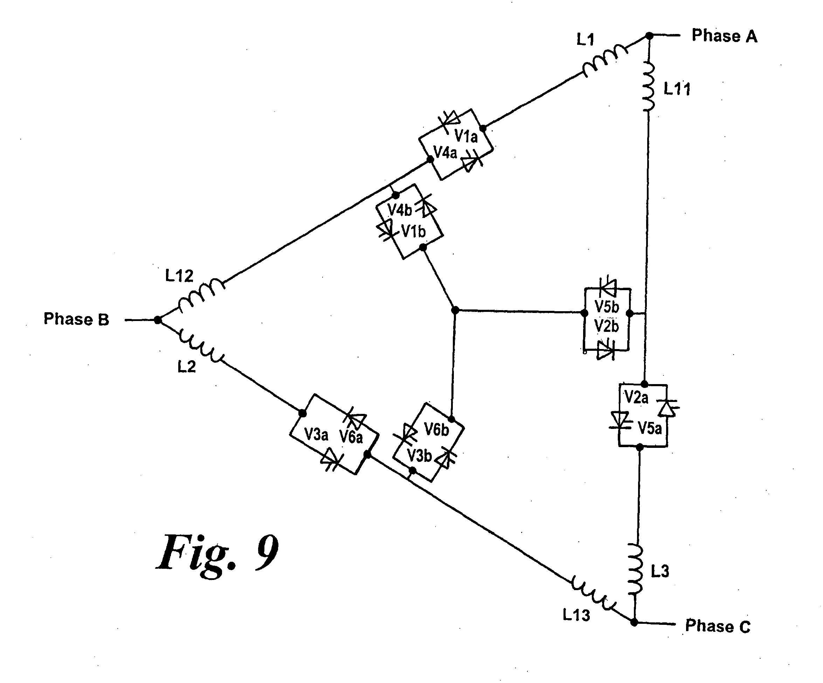

Switches S3 and S4 are closed connecting the midpoints of the valves $V_1$-$V_6$ of the first bridge 22 to the AC connections of the second bridge 24 so forming a delta-connected TCR utilizing the inner halves $V_{1a}$-$V_{6a}$ of the valves $V_1$-$V_6$ in the first bridge 22 and all six AC reactors L1-L3 and L11-L13 as shown in Figure 9.

As can be seen from Figure 9, the outer halves $V_{1b}$-$V_{6b}$ of the valves $V_1$-$V_6$ of the first bridge 22 are connected line-to-neutral and remain blocked (nonconducting) throughout. This could be seen as a disadvantage due to the voltage imposed across them. However, the fact that they remain energized (even at relatively low voltage) allows on-board monitoring circuits to continue to function so that the operator is made aware of any component failures that might occur.

It is envisaged that the switching circuit 28 shown in Figure 8 could be further modified to include four additional three-pole switches so that the outer halves $V_{1b}$-$V_{6b}$ of the valves $V_1$-$V_6$ of the first bridge 22 are isolated, as in the embodiment described earlier with reference to Figure 6.

Possible disadvantages of the HVDC installation shown in Figure 8 include the fact that, in SVC mode, the second bridge 24 is not used at all. With switch S5 open, no voltage is experienced across the valves $V_{11}$-$V_{16}$ of the second bridge 24 and therefore status monitoring of these valves $V_{11}$-$V_{16}$ may be impossible.

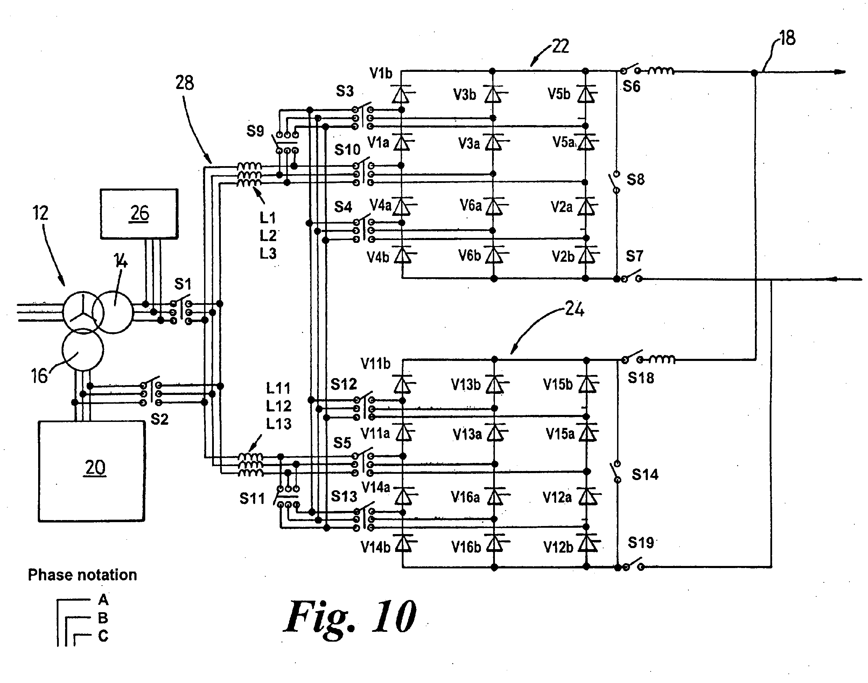

In addition, SVC mode is dependent entirely on the availability of the first bridge 22, and improved reliability may be obtained if it is possible to choose between the first and second bridges 22,24 as shown in Figure 10.

In the embodiment shown in Figure 10, each of the valves $V_{11}$-$V_{16}$ in the second bridge 24 is also sub-divided at its mid-point to create inner and outer halves $V_{11a}$-$V_{16a}$, $V_{11b}$-$V_{16b}$ and additional switches S9-S14 are incorporated into the switch circuit 28 to create a fully symmetrical and flexible arrangement which allows SVC mode to use either of the two bridges 22,24 as a TCR while keeping the other bridge in standby.

The standby bridge could either be totally isolated or remain energized but in a passive (blocked) state, according to preference.

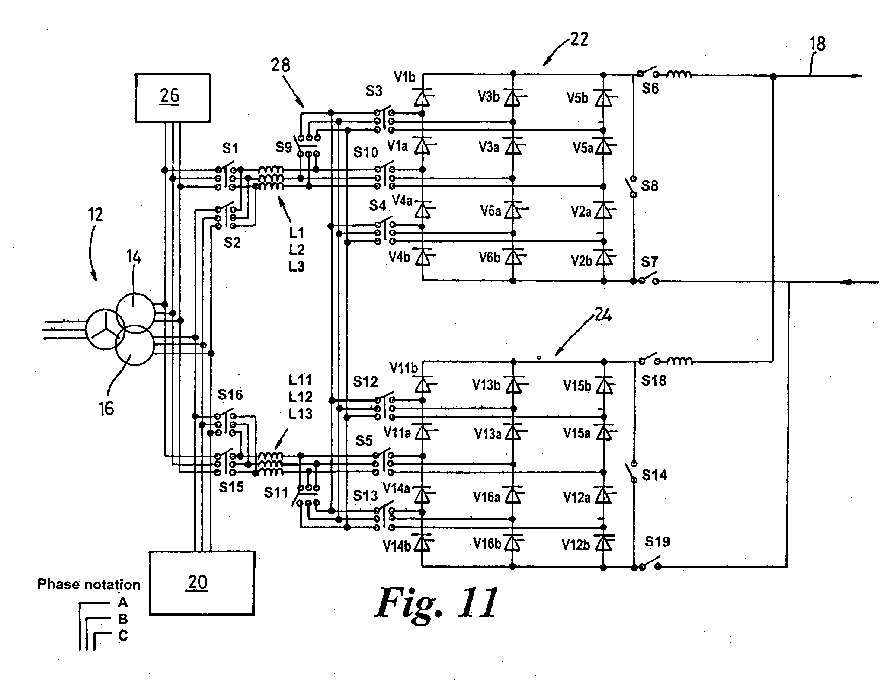

While the HVDC installation shown in Figure 10 provides considerable flexibility, a practical limitation is that switches S1 and S2 carry the entire rated current of the installation. In circumstances where this is equivalent to around 6000 A rms, this is beyond the ratings of most available switchgear. Thus, the installation may be modified so that each of the bridges 22,24 is fed separately by a dedicated switch, as shown in Figure 11.

The embodiments shown in Figures 10 and 11 allow either of the bridges 22,24 to be used as the TCR while keeping the other in standby.

The full set of switch positions needed to reconfigure the bridges 22,24 of the HVDC installation shown in Figure 11 from real power mode to SVC mode, using either of the two bridges 22,24 and keeping the other de-energized, is shown in Table 1.

Table 1

| Switch | HVDC Mode | SVC Mode, First Bridge | SVC Mode, Second Bridge |
|---|---|---|---|
| S1 | CLOSED | OPEN ||
| S2 | OPEN | CLOSED ||
| S3 | OPEN | CLOSED | OPEN |
| S4 | OPEN | CLOSED | OPEN |
| S5 | CLOSED | OPEN | CLOSED |
| S6 | CLOSED | OPEN | OPEN |
| S7 | CLOSED | OPEN | OPEN |
| S8 | OPEN | CLOSED ||
| S9 | OPEN | OPEN | CLOSED |
| S10 | CLOSED | CLOSED | OPEN |
| S11 | OPEN | CLOSED | OPEN |
| S12 | OPEN | OPEN | CLOSED |
| S13 | OPEN | OPEN | CLOSED |
| S14 | OPEN | CLOSED ||
| S15 | CLOSED | OPEN ||
| S16 | OPEN | CLOSED ||
| S18 | CLOSED | OPEN | OPEN |
| S19 | CLOSED | OPEN | OPEN |

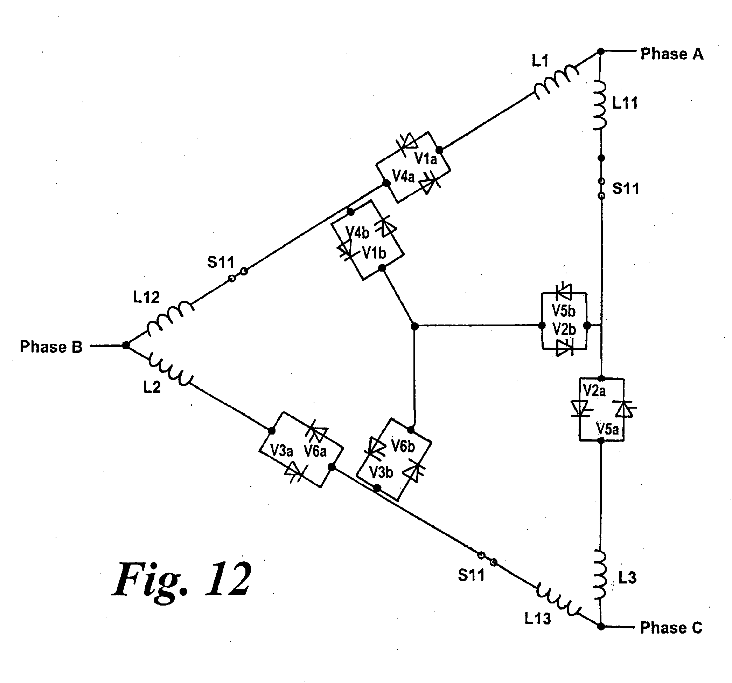

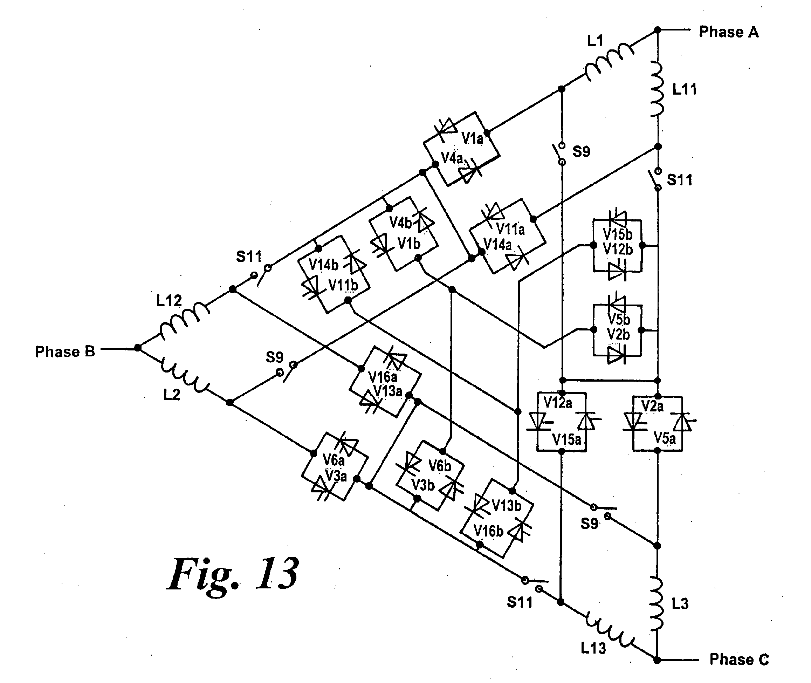

The delta-connected TCR created when the first bridge 22 of the installation shown in Figure 11 is used in SVC mode is shown in Figure 12.
Further modifications to the installation shown in Figure 11 may be considered to improve the functionality of the installation.
One such modification would be removal of switches S10 and S5 thereby rendering it impossible to isolate one converter from the other. In SVC mode this would mean that, if the first bridge 22 was being used as a TCR, the valves $V_{11}$-$V_{16}$ of the second bridge 24 would continue to experience voltage.
If switches S12 and S13 are kept open in such an embodiment, each of the valves $V_{11}$-$V_{16}$ of the second bridge 24 would experience line-to-neutral voltage across the entire valve. This would give low power losses but the applied voltage may not be sufficient to energize the on-board monitoring systems.
If, instead, switches S12- and S13 are closed, allowing switches S3, S4, S12 and S13 to be ganged together and form a 12-pole switch, the nature of the stresses on the valves $V_{11}$-$V_{16}$ in the second bridge 24 in SVC mode changes completely. In effect each of the inner halves $V_{11a}$-$V_{16a}$ of the valves $V_{11}$-$V_{16}$ in the second bridge 24 are connected in parallel with the corresponding inner halves $V_{1a}$-$V_6$, of the valves $V_1$-$V_6$ in the first bridge 22, and each of the outer halves $V_{11b}$-$V_{16b}$ of the valves $V_{11}$-$V_{16}$ in the second bridge 24 are connected in parallel with the corresponding outer halves $V_{1b}$-$V_{6b}$ of the valves $V_1$-$V_6$ in the first bridge 22. This gives rise to a substantial increase in power losses, particularly in the inner halves $V_{11a}$-$V_{16a}$ of the valves $V_{11}$-$V_{16}$ in the second bridge 24 which experience the full line-to-line voltage and step changes of voltage seen by the inner halves $V_{1a}$-$V_{6a}$ of the valves $V_1$-$V_6$ in the first bridge 22.
However, because in effect the individual valves $V_1$-$V_6$, $V_{11}$-$V_{16}$ of the bridges 22,24 are connected in parallel, this makes it possible to change from SVC mode in the first bridge 22 to SVC mode in the second bridge 24 entirely electronically, merely by choosing which bridge to route the valve turn-on commands to.
The SVC mode of an HVDC installation in which switches S10 and S5 are removed and switches S3, S4, S12 and S13 are ganged together is shown in Figure 13.
Removal of one of switches S9 and S11, or ganging these two switches together would also ensure that all mechanical switch positions are independent of which bridge is to be used for SVC mode, i.e. ensure that there are only two sets of mechanical switch positions, one for real power mode and one for SVC mode.

Removing switch S9 provides an arrangement that works acceptably when the first bridge 22 is used as the TCR. However if it is used to configure the second bridge 24 as a TCR, reactors L1-L3 are not used. This could result in thermal overload of reactors L11-L13.

Retaining switch S9 but ganging it together with switch S11 has a similar effect, but instead reactors L1-L3 carry current for a higher duty cycle than reactors L11-L13, irrespective of which bridge 22,24 is being used in the TCR. This could result in thermal overload of reactors L1-L3.

Thus, for maximum utilization of the series reactors L1-L3 and L11-L13, it is necessary for switches S9 and S11 to be present and switchable independently.

Another such modification would be removal of switches S8 and S14. These switches are included in the embodiments shown in Figures 10 and 11 to ensure that the outer halves $V_{1b}$-$V_{6b}$, $V_{11b}$-$V_{16b}$ of the valves $V_1$-$V_6$,$V_{11}$-$V_{16}$ are tied to a common potential and, if desired, can be earthed at that point. However, earthing may be obtained with an earth switch on each DC terminal of the bridges 22,24.

While each of the HVDC installations 10 illustrated in Figures 6-13 includes a thyristor switched capacitor (TSC) to provide capacitive reactive power output in the SVC mode it is envisaged that, the TSC may be replaced with a mechanically (i.e. circuit-breaker) switched capacitor or a static synchronous compensator (STATCOM).

It is also envisaged that, in other embodiments, the TSC may be omitted.

For example, in embodiments where the required capacitive reactive power output is less than 75% of the maximum inductive reactive power provided by the TCR, the capacitive reactive power output may be provided by AC filters 26, which are essentially capacitors. In such embodiments, the switch circuit 28 would be arranged to ensure that the AC filters 26 are included in the circuit in SVC mode.

The TSC (and optionally the AC filters 26) may also be omitted in embodiments having only inductive reactive power requirements (i.e. 0/-125MVAr). In such embodiments, the user of the installation may be concerned in controlling temporary overvoltages only, and may not be concerned with controlling undervoltages. In addition, the user may not be concerned with the harmonic currents the TCR or HVDC valves could inject onto the AC system (perhaps having filtering nearby from other installations).

In addition, while the AC input of each of the HVDC installations illustrated in Figures 6-13 is in the form of a step-down transformer 12 having secondary and tertiary windings 14,16, it is envisaged that other means of decreasing the input voltage between the HVDC and SVC modes may be employed so that the tertiary winding is not required and can be omitted.

For example, a tapchanger (on-load or offload) or fixed taps could be provided on the primary or secondary winding 14 of the step-down transformer 12. In such embodiments, this would enable the turns ratio to be changed between HVDC node and SVC mode, thereby ensuring that the input voltage is reduced in SVC mode. In other embodiments a separate autotransformer could be provided on the secondary side in order to reduce the input voltage in SVC mode, or the connection of one or both of the transformer windings could be changed from star to delta or vice versa to change the turns ratio by the factor root 3 1.732.

**Claims**

1. A high voltage direct current installation (10) operable as an HVDC converter and convertible to operate as a static var compensator, the installation comprising an AC input (12) and a DC output (18), **characterized in that** it comprises:

   a first (22) and a second (24) Graetz bridges connected in parallel between the AC input and the DC output such that all of the thyristor levels of the bridges are utilized;
   a switch circuit (28, 51-519) operable to disconnect the DC output such that one or both of the bridges forms a thyristor controlled reactor (TCR) and a reduced number of the thyristor levels of the bridges are utilized; and
   means (12) to reduce the size of the input voltage provided by the AC input when the DC output is disconnected.

2. An HVDC installation as claimed in Claim 1 wherein each of the valves ($V_1$-$V_6$, $V_{11}$-$V_{16}$) in the bridges is sub-divided into inner and outer halves ($V_{1a}$-$V_{6a}$, $V_{1b}$-$V_{6b}$ ; $V_{11a}$-$V_{16a}$ , $V_{11b}$-$V_{16b}$) and the switch circuit (28) is operable to isolate the outer halves when the DC output is disconnected, the inner halves of each bridge forming a star-connected TCR.

3. An HVDC installation as claimed in Claim 1 wherein the switch circuit (28) is operable to disconnect the DC output such that the first bridge (22) is energized and the second bridge (24) is isolated, the first bridge forming a delta-connected TCR.

4. An HVDC installation as claimed in Claim 3 wherein each of the valves ($V_1$-$V_6$) of the first bridge (22) is sub-divided into inner and outer halves ($V_{1a}$-$V_{6a}$, $V_{1b}$-$V_{6b}$) and the switch circuit (28) is operable to block the outer halves of the first bridge in a passive state when the DC output is disconnected, the inner halves of the first bridge forming the delta-connected TCR.

5. An HVDC installation as claimed in Claim 1 wherein each of the valves ($V_1$-$V_6$, $V_{11}$-$V_{16}$) of the bridges is sub-divided into inner and outer halves ($V_{1a}$-$V_{6a}$, $V_{1b}$-$V_{6b}$; $V_{11a}$-$V_{16a}$, $V_{11b}$-$V_{16b}$) and the switch circuit (28) is operable to disconnect the DC output such that one of the bridges is energized and the other of the bridges is isolated, the outer halves of the energized bridge being blocked in a passive state and the inner halves of the energized bridge forming a delta-connected TCR.

6. An HVDC installation as claimed in Claim 1 wherein each of the valves ($V_1$-$V_6$, $V_{11}$-$V_{16}$) of the bridges is sub-divided into inner and outer halves ($V_{1a}$-$V_{6a}$, $V_{1b}$-$V_{6b}$; $V_{11a}$-$V_{16a}$, $V_{11b}$-$V_{16b}$) and the switch circuit (28) is operable to disconnect the DC output such that one of the bridges is energized and the other of the bridges is blocked in a passive state, the outer halves of the energized bridge being blocked in a passive state and the inner halves of the energized bridge forming a delta-connected TCR.

7. An HVDC installation as claimed in any one of the preceding claims further including a thyristor switched capacitor to provide capacitive reactive power output when the DC output is disconnected.

8. An HVDC installation as claimed in any one of Claims 1-6 further including a mechanically switched capacitor to provide capacitive reactive power output when the DC output (18) is disconnected.

9. An HVDC installation as claimed in any one of the preceding claims further including AC filters (26) in the form of shunt connected capacitor banks to provide capacitive reactive power output when the DC output is disconnected.

10. An HVDC installation as claimed in any one of the preceding claims wherein the AC input (12) is a step-down transformer having secondary and tertiary windings, the tertiary winding supplying a smaller input voltage than the secondary winding, the bridges being connected in parallel between the secondary winding of the step-down transformer and the DC output; and the switch circuit (28) is operable to disconnect the bridges from the secondary winding and connect the bridges to the tertiary winding when disconnecting the DC output (18).

11. An HVDC installation as claimed in Claim 7 and Claim 10 wherein the thyristor switched capacitor is connected to the tertiary winding.

12. An HVDC installation as claimed in Claim 8 and Claim 10 wherein the mechanically switched capacitor is connected to the tertiary winding.

13. A method of converting an HVDC installation to operate as a static var compensator, the high voltage direct current installation including first (22) and second (24) Graetz bridges connected in parallel between an AC input (12) and a DC output (18) such that all of the thyristor levels of the bridges are utilized, **characterized in that** it comprises the steps of:

    (i) disconnecting the DC output such that one or both of the bridges forms a thyristor controlled reactor (TCR) utilizing a switch circuit (28, S1-S19) and a reduced number of thyristor levels of the bridges; and
    (ii) reducing the size of input voltage provided by the AC input.

14. A method of converting an HVDC installation to operate as a static var compensator as claimed in Claim 13 further including the step of subdividing each of the valves ($V_1$-$V_6$, $V_{11}$-$V_{16}$) in the bridges into inner and outer halves ($V_{1a}$-$V_{6a}$, $V_{1b}$-$V_{6b}$; $V_{11a}$-$V_{16a}$, $V_{11b}$-$V_{16b}$), and wherein the step of disconnecting the DC output includes the sub-step of isolating the outer halves of the bridges such that the inner halves of each of the bridges forms a star-connected TCR.

15. A method of converting an HVDC installation to operate as a static var compensator as claimed in Claim 13 wherein the step of disconnecting the DC output includes the sub-step of isolating the second bridge (24) such that the first bridge forms a delta-connected TCR.

16. A method of converting an HVDC installation to operate as a static var compensator as claimed in Claim 15 further including the step of subdividing each of the valves ($V_1$-$V_6$) of the first bridge (22) into inner and outer halves, and wherein the step of disconnecting the DC output further includes the sub-step of blocking the outer halves of the first bridge in a passive state such that the inner halves of the first bridge form the delta-connected TCR.

17. A method of converting an HVDC installation to operate as a static var compensator as claimed in Claim 13 further including the step of subdividing each of the valves ($V_1$-$V_6$, $V_{11}$-$V_{16}$) of the bridges (22, 24) into inner and outer halves ($V_{1a}$-$V_{6a}$, $V_{1b}$-$V_{6b}$; $V_{11}a$-$V_{16a}$, $V_{11b}$-$V_{16b}$), and wherein the step of disconnecting the DC output further includes the sub-step of isolating one of the bridges and blocking the outer halves of the energized bridge in a passive state such that the inner halves of the energized bridge form a delta-connected TCR.

18. A method of converting an HVDC installation to operate as a static var compensator as claimed in Claim 13 further includes the step of subdividing each of the valves ($V_1$-$V_6$, $V_{11}$-$V_{16}$) of the bridges (22, 24) into inner and outer halves ($V_{1a}$-$V_{6a}$, $V_{1b}$-$V_{6b}$; $V_{11a}$-$V_{16a}$, $V_{11b}$-$V_{16b}$), and wherein the step of disconnecting the DC output further includes the sub-step of blocking one of the bridges in a passive state and blocking the outer halves of the energized bridge in a passive state such that the inner halves of the energized bridge form a delta-connected TCR.

19. A method of converting an HVDC installation to operate as a static var compensator as claimed in any one of Claims 13-18 further including the step of connecting a thyristor switched capacitor to the bridges.

20. A method of converting an HVDC installation to operate as a static var compensator as claimed in any one of Claims 13-19 wherein the step of reducing the input voltage from the AC input includes the sub-steps of disconnecting the bridges (22, 24) from a secondary winding of a step-down transformer providing a first input voltage and connecting the bridges to a tertiary winding of the step-down transformer providing a second, lower, input voltage.

**Patentansprüche**

1. Hochspannungs-Gleichstrom-Installation (10), die als ein Hochspannungs-Gleichstrom-Umformer betreibbar ist und umgewandelt werden kann, um als ein statischer Änderungskompensator zu arbeiten, wobei die Installation einen Wechselstrom-Eingang (12) und einen Gleichstrom-Ausgang (18) aufweist, **gekennzeichnet durch** eine erste (22) und eine zweite (24) Graetz-Brücke, die zwischen dem Wechselstrom-Eingang und dem Gleichstrom-Ausgang parallel geschaltet sind, so daß alle Thyristor-Stufen der Brücken benutzt werden; ferner **gekennzeichnet durch** einen Schaltkreis (28, S1 - S19), der so betreibbar ist, daß er den Gleichstrom-Ausgang trennt, so daß eine oder beide Brücken einen Thyristor-gesteuerten Reaktor (TCR) bilden und eine verringerte Zahl Thyristor-Stufen der Brücken benutzt wird; und **gekennzeichnet durch** eine Einrichtung (12) zur Verkleinerung der Größe der Eingangsspannung, die von dem Wechselstrom-Eingang erzeugt wird, sobald der Gleichstrom-Ausgang abgetrennt ist.

2. Hochspannungs-Gleichstrom-Installation nach Anspruch 1, **dadurch gekennzeichnet, daß** jedes der Ventile ($V_1$ - $V_6$, $V_{11}$ - $V_{16}$) in den Brücken in innere und äußere Hälften ($V_{1a}$ - $V_{6a}$, $V_{1b}$ - $V_{6b}$; $V_{11a}$ - $V_{16a}$, $V_{11b}$ - $V_{16b}$) unterteilt ist, und daß der Schaltkreis (28) so betreibbar ist, daß die äußeren Hälften isoliert sind, sobald der Gleichstrom-Ausgang abgetrennt ist, während die inneren Hälften jeder Brücke einen Stern-geschalteten TCR bilden.

3. Hochspannungs-Gleichstrom-Installation nach Anspruch 1, **dadurch gekennzeichnet, daß** der Schaltkreis (28) so betreibbar ist, daß der Gleichstrom-Ausgang abgeschaltet wird, so daß die erste Brücke (22) erregt und die zweite Brücke (24) isoliert ist, wobei die erste Brücke einen im Dreieck geschalteten TCR bildet.

4. Hochspannungs-Gleichstrom-Installation nach Anspruch 3, **dadurch gekennzeichnet, daß** jedes der Ventile ($V_1$ - $V_6$) der ersten Brücke (22) in innere und äußere Hälften ($V_{1a}$ - $V_{6a}$, $V_{1b}$ - $V_{6b}$) unterteilt ist, und daß der Schaltkreis (28) so betreibbar ist, daß die äußeren Hälften der ersten Brücke in einem passiven Zustand blockiert werden, sobald der Gleichstrom-Ausgang abgeschaltet wird, während die inneren Hälften der ersten Brücken einen im Dreieck geschalteten TCR bilden.

5. Hochspannungs-Gleichstrom-Installation nach Anspruch 1, **dadurch gekennzeichnet, daß** jedes der Ventile ($V_1$ - $V_6$, $V_{11}$ - $V_{16}$) der Brücken in innere und äußere Hälften ($V_{1a}$ - $V_{6a}$, $V_{1b}$ - $V_{6b}$; $V_{11a}$ - $V_{16a}$, $V_{11b}$ - $V_{16b}$) unterteilt ist und der Schaltkreis (28) so betreibbar ist, daß der Gleichstrom-Ausgang in der Weise abgetrennt ist, daß die eine Brücke erregt und die andere Brücke isoliert wird, wobei die äußeren Hälften der erregten Brücke in einem passiven Zustand blockiert werden und die inneren Hälften der erregten Brücke einen im Dreieck geschalteten TCR bilden.

6. Hochspannungs-Gleichstrom-Installation nach Anspruch 1, **dadurch gekennzeichnet, daß** jedes der Ventile ($V_1$ - $V_6$, $V_{11}$ - $V_{16}$) der Brücken in innere und äußere Hälften ($V_{1a}$ - $V_{6a}$, $V_{1b}$ - $V_{6b}$; $V_{11a}$ - $V_{16a}$, $V_{11b}$ $V_{16b}$) unterteilt ist, und daß der Schaltkreis (28) so betreibbar ist, daß der Gleichstrom-Ausgang abgeschaltet wird, so daß die eine Brücke erregt und die andere Brücke in einem passiven Zustand blockiert wird, wobei die äußeren Hälften der erregten Brücke in einem passiven Zustand blockiert werden und die inneren Hälften der erregten Brücke einen im Dreieck geschalteten TCR bilden.

7. Hochspannungs-Gleichstrom-Installation nach einem der vorhergehenden Ansprüche, **gekennzeichnet durch** einen Thyristor-geschalteten Kondensator zur Erzeugung einer kapazitiven Reaktions-Ausgangsspannung, sobald der Gleichstrom-Ausgang abgeschaltet wird.

8. Hochspannungs-Gleichstrom-Installation nach einem der vorhergehenden Ansprüche 1 bis 6, **gekennzeichnet durch** einen mechanisch geschalteten Kondensator zur Erzeugung einer kapazitiven Reaktions-Ausgangsspannung, sobald der Gleichstrom-Ausgang (18) abgeschaltet ist.

9. Hochspannungs-Gleichstrom-Installation nach einem der vorhergehenden Ansprüche, ferner **gekennzeichnet durch** Wochselstrom-Filter (26) in Form von im Nebenschluß-geschalteten Kondensatorblöcken zur Erzeugung eines kapazitiven, reaktiven Spannungsausgangs, sobald der Gleichstrom-Ausgang abgetrennt ist.

10. Hochspannungs-Gleichstrom-Installation nach einem der vorhergehenden Ansprüche, **dadurch gekennzeichnet, daß** der Wechseistrom-Eingang (12) ein AbwärtstransFormator mit Sekundär- und Tertiär-Wicklungen ist, wobei die Tertiärwicklung eine kleinere Eingangsspannung liefert als die Sekundärwicklung und die Brücken zwischen der Sekundärwicklung des Abwärtstransformators und dem Gleichstrom-Ausgang parallel geschaltet sind, und daß der Schaltkreis (28) so betreibbar ist, daß die Brücken von der Sekundärwicklung getrennt werden und die Brücken mit der Tertiärwicklung verbunden werden, sobald der Gleichstrom-Ausgang (18) abgetrennt wird.

11. Hochspannungs-Gleichstrom-Installation nach Anspruch 7 und Anspruch 10, **dadurch gekennzeichnet, daß** der Thyristor-geschaltete Kondensator an die Tertiärwicklung angeschlossen ist.

12. Hochspannungs-Gleichstrom-Installation nach Anspruch 8 und Anspruch 10, **dadurch gekennzeichnet, daß** der mechanisch geschaltete Kondensator an die Tortiärwicklung angeschlossen ist.

13. Verfahren zur Umwandlung einer Hochspannungs-Gleichstrom-Installation zwecks Betriebs eines statischen Stufen- bzw. Änderungskompensators, wobei die Hochspannungs-Gleichstrom-Installation eine erste (22) und eine zweite (24) Graetz-Brücke aufweist, die zwischen einem Wechselstrom-Eingang (12) und einem Gleichstrom-Ausgang (18) parallel geschaltet sind, derart, daß alle Thyristor-Stufen der Brücken benutzt werden, **dadurch gekennzeichnet, daß** die Installation aus den folgenden Schritten besteht:

   i) Trennen des Gleichstrom-Ausgangs derart, daß eine oder beide Brücken einen Thyristor-gesteuerten Reaktor (TCR) bilden, der einen Schaltkreis (28, S1 - S19) und eine verkleinerte Anzahl Thyristor-Stufen der Brücken benutzt, und
   ii) Verringerung der Größe der Eingangsspannung, die von dem Wechselstrom-Eingang gebildet wird.

14. Verfahren zur Umwandlung einer Hochspannungs-Gleichstrom-Installation zum Betriebs eines statischen Stufenkompensators nach Anspruch 13, ferner **gekennzeichnet durch** den Schritt der Unterteilung jedes der Ventile ($V_1$ - $V_6$, $V_{11}$ - $V_{16}$) in den Brücken in innere und äußere Hälften ($V_{1a}$ - $V_{6a}$, $V_{1b}$ - $V_{6b}$; $V_{11a}$ - $V_{16a}$, $V_{11b}$ - $V_{16b}$), wobei der Schritt der Trennung des Gleichstrom-Ausgangs den Unterschrift der Isolierung der äußeren Hälften der Brücken derart aufweist, daß die inneren Hälften jeder Brücke einen Stern-geschalteten TCR bilden.

15. Verfahren zur Umwandlung einer Hochspannungs-Gleichstrom-Installation zwecks Betriebs eines statischen Stufenkompensators nach Anspruch 13, **dadurch gekennzeichnet, daß** der Schritt der Unterbrechung des Gleichstrom-Ausgangs den Unterschrift der Isolierung der zweiten Brücke (24) aufweist, und zwar derart, daß die erste Brücke einen im Dreieck geschalteten TCR bildet.

16. Verfahren zur Umwandlung einer Hochspannungs-Gleichstrom-Installation zwecks Betriebs eines statischen Stufenkompensators nach Anspruch 15, ferner **gekennzeichnet durch** den Schritt der Unterteilung jedes der Ventile ($V_1$ - $V_6$) der ersten Brücke (22) in innere und äußere Hälften, wobei der Schritt der Abtrennung des Gleichstrom-Ausgangs des weiteren den Unterschritt der Blockierung der äußeren Hälften der ersten Brücke in einen passiven

**EP 1 787 383 B1**

Zustand aufweist, so daß die inneren Hälften der ersten Brücke den im Dreieck geschalteten TCR bilden.

17. Verfahren zur Umwandlung einer Hochspannungs-Gleichstrom-Installation zwecks Betriebs eines statischen Stufenkompensators nach Anspruch 13, ferner **gekennzeichnet durch** den Schritt der Unterteilung jedes der Ventile ($V_1$ - $V_6$, $V_{11}$ - $V_{16}$) der Brücken (22, 24) in innere und äußere Hälften ($V_{1a}$ - $V_{6a}$, $V_{1b}$ - $V_{6b}$ $V_{11a}$ - $V_{16a}$, $V_{11}$b - $V_{16b}$), wobei der Schritt der Unterbrechung des Gleichstrom-Ausgangs des weiteren der Unterschrift der Isolierung einer der Brücken und Blockierung der äußeren Hälften der erregten Brücke in einen passiven Zustand gehört, derart, daß die inneren Hälften der erregten Brücke einen im Dreieck geschalteten TCR bilden.

18. Verfahren zur Umwandlung einer Hochspannungs-Gleichstrom-Installation zwecks Betriebs eines statischen Stufenkompensators nach Anspruch 13, ferner **gekennzeichnet durch** den Schritt der Unterteilung jedes der Ventile ($V_{1a}$- $V_6$, , $V_{11}$ - $V_{16}$), der Brücken (22, 24) in innere und äußere Hälften ($V_{1a}$ - $V_{6a}$, $V_{1b}$ - $V_{6b}$; $V_{11a}$ - $V_{16a}$, $V_{11b}$ - $V_{16b}$) aufweist, wobei zu dem Schritt der Abtretung des Gleichstrom-Ausgangs des weiteren der Hunterschritt der Blockierung einer der Brücken in einem passiven Zustand und der Blockierung der äußeren Hälften der erregten Brücke in einem passiven Zustand gehört, derart, daß die inneren Hälften der erregten Brücke einen im Dreieck geschalteten TCR bilden.

19. Verfahren zur Umwandlung einer Hochspannungs-Gleichstrom-Installation zwecks Betriebs eines statischen Stufenkompensators nach einem der Ansprüche 13-18, ferner **gekennzeichnet durch** den Schritt des Anschließens eines Thyristor-geschalteten Kondensators an die Brücken.

20. Verfahren zur Umwandlung einer Hochspannungs-Gleichstrom-Installation zwecks Betriebs eines statischen Stufenkompensators nach einem der Ansprüche 13 - 19, **dadurch gekennzeichnet, daß** der Schritt der Verringerung der Eingangsspannung des Wechselstrom-Eingangs die Unterschritte der Abschaltung der Brücken (22, 24) von einer Sekundärwicklung eines Abwärts-Transformators, der eine erste Eingangsspannung bildet, sowie des Anschließens der Brücken an eine Tertiärwicklung des Abwärts-Transformators, um eine zweite, geringere Eingangsspannung zu erzeugen.

**Revendications**

1. Installation de courant continu à haute tension (10) utilisable comme un convertisseur de courant continu à haute tension et convertible pour fonctionner comme un compensateur VAR statique, l'installation comprenant une entrée de courant alternatif (12) et une sortie de courant continu (18), **caractérisée en ce qu'**elle comprend :

   un premier (22) et un second (24) ponts de Graëtz raccordés en parallèle entre l'entrée de courant alternatif et la sortie de courant continu de telle sorte que tous les niveaux de thyristor des ponts soient utilisés ;
   un circuit de commutation (28, S1-S19) utilisable pour déconnecter la sortie de courant continu de sorte que un ou les deux ponts forment une réactance commandée de thyristor et un nombre réduit des niveaux de thyristor des ponts est utilisé ; et
   des moyens (12) pour réduire la taille de la tension d'entrée fournie par l'entrée de courant alternatif quand la sortie de courant continu est déconnectée.

2. Installation selon la revendication 1, dans laquelle chacune des soupapes ($V_1$-$V_6$, $V_{11}$-$V_{16}$) dans les ponts est subdivisée en moitiés intérieures et extérieures ($V_{1a}$-$V_{6a}$, $V_{1b}$-$V_{6b}$ ; $V_{11a}$-$V_{16a}$, $V_{11b}$ - $V_{16b}$) et le circuit de commutation (28) est utilisable pour isoler les moitiés extérieures quand la sortie de courant continu est déconnectée, les moitiés intérieures de chaque pont formant une réactance commandée de thyristor en étoile.

3. Installation selon la revendication 1, dans laquelle le circuit de commutation (28) est utilisable pour déconnecter la sortie de courant continu de sorte que le premier pont (22) soit activé et le second pont (24) soit isolé, le premier pont formant une réactance commandée de thyristor en delta.

4. Installation selon la revendication 3, dans laquelle chacune des soupapes ($V_1$-$V_6$) du premier pont (22) est subdivisée en moitiés intérieures et extérieures ($V_{1a}$-$V_{6a}$, $V_{1b}$-$V_{6b}$) et le circuit de commutation (28) est utilisable pour bloquer les moitiés extérieures du premier pont dans un état passif quand la sortie de courant continu est déconnectée, les moitiés intérieures du premier pont formant la réactance commandée de thyristor en delta.

5. Installation selon la revendication 1, dans laquelle chacune des soupapes ($V_1$-$V_6$, $V_{11}$-$V_{16}$) des ponts est subdivisée

**12**

en moitiés intérieures et extérieures ($V_{1a}$-$V_{6a}$. $V_{1b}$-$V_{6b}$ ; $V_{11a}$-$V_{16a}$, $V_{11b}$-$V_{16b}$) et le circuit de commutation (28) est utilisable pour déconnecter la sortie de courant continu de sorte que l'un des ponts est activé et l'autre des ponts est isolé, les moitiés extérieures du pont activé étant bloquées dans un état passif et les moitiés intérieures du pont activé formant une réactance commandée de thyristor en delta.

6.  Installation selon la revendication 1, dans laquelle chacune des soupapes ($V_1$-$V_6$, $V_{11}$-$V_{16}$) des ponts est subdivisée en moitiés intérieures et extérieures ($V_{1a}$-$V_{6a}$, $V_{1b}$-$V_{6b}$ ; $V_{11a}$-$V_{16a}$, $V_{11b}$ -$V_{16b}$) et le circuit de commutation (28) est utilisable pour déconnecter la sortie de courant continu de sorte que l'un des ponts est activé et l'autre des ponts est biloqué dans un état passif, les moitiés extérieures du pont activé étant bloquées dans un état passif et les moitiés intérieures du pont activé formant une réactance commandée de thyristor en delta.

7.  Installation selon l'une quelconque des revendications précédentes, comprenant également un condensateur commuté par thyristor pour fournir une sortie de puissance réactive capacitive quand la sortie de courant continu est déconnectée.

8.  Installation selon l'une quelconque des revendications 1 à 6, comprenant également un condensateur commuté mécaniquement pour fournir une sortie de puissance réactive capacitive quand la sortie de courant continu (18) est déconnectée.

9.  Installation selon l'une quelconque des revendications précédentes, comprenant également des filtres de courant alternatif (26) sous la forme de batteries de condensateurs raccordés en dérivation pour fournir une sortie de puissance réactive capacitive quand la sortie de courant continu est déconnectée.

10. Installation selon l'une quelconque des revendications précédentes, dans laquelle l'entrée de courant alternatif (12) est un transformateur abaisseur ayant des enroulements secondaire et tertiaire, l'enroulement tertiaire fournissant une plus petite tension d'entrée que l'enroulement secondaire, les ponts étant raccordés en parallèle entre l'enroulement secondaire du transformateur abaisseur et la sortie de courant continu; et le circuit de commutation (28) est utilisable pour déconnecter les ponts de l'enroulement secondaire et connecter les ponts à l'enroulement tertiaire quand la sortie de courant continu (18) est déconnectée.

11. Installation selon la revendication 7 et la revendication 10, dans laquelle le condensateur commuté par thyristor est raccordé à l'enroulement tertiaire.

12. Installation selon la revendication 8 et la revendication 10, dans laquelle le condensateur commuté mécaniquement est raccordé à l'enroulement tertiaire.

13. Procédé de conversion d'une installation de courant continu à haute tension pour fonctionner comme un compensateur VAR statique, l'installation de courant continu à haute tension comprenant un premier (22) et un second (24) ponts de Graëtz raccordés en parallèle entre une entrée de courant alternatif (12) et une sortie de courant continu (18) de sorte que tous les niveaux de thyristor des ponts soient utilisés,
    **caractérisé en ce qu'**il comprend les étapes consistant à :

    (i) déconnecter la sortie de courant continu de sorte que un ou les deux ponts forment une réactance contrôlée de thyristor utilisant un circuit de commutation (28, S1-S19) et un nombre réduit de niveaux de thyristor des ponts ; et
    (ii) réduire la taille de la tension d'entrée fournie par l'entrée de courant alternatif.

14. Procédé de conversion d'une installation de courant continu à haute tension pour fonctionner comme un compensateur VAR statique selon la revendication 13 comprenant également l'étape de subdivision de chacune des soupapes ($V_1$-$V_6$, $V_{11}$-$V_{16}$) dans les ponts dans les moitiés intérieures et extérieures ($V_{1a}$-$V_{6a}$, $V_{1b}$-$V_{6b}$; $V_{11a}$-$V_{16a}$, $V_{11b}$-$V_{16b}$), et dans lequel l'étape destinée à déconnecter la sortie de courant continu comprend l'étape secondaire d'isolation des moitiés extérieures des ponts de sorte que les moitiés intérieures de chacun des ponts forment une réactance commandée de thyristor en étoile.

15. Procédé de conversion d'une installation de courant continu à haute tension pour fonctionner comme un compensateur VAR statique selon la revendication 13, dans lequel l'étape destinée à déconnecter la sortie de courant continu comprend l'étape secondaire d'isolation du second pont (24) de sorte que le premier pont forme une réactance commandée de thyristor en delta.

**16.** Procédé de conversion d'une installation de courant continu à haute tension pour fonctionner comme un compensateur VAR statique selon la revendication 15 comprenant également l'étape de subdivision de chacune des soupapes ($V_1$-$V_6$) du premier pont (22) en moitiés intérieures et extérieures, et l'étape destinée à déconnecter la sortie de courant continu comprenant également l'étape secondaire de blocage des moitiés extérieures du premier pont dans un état passif de sorte que les moitiés intérieures du premier pont forment la réactance commandée de thyristor en delta.

**17.** Procédé de conversion d'une installation de courant continu à haute tension pour fonctionner comme un compensateur VAR statique selon la revendication 13 comprenant également l'étape de subdivision de chacune des soupapes ($V_1$-$V_6$, $V_{11}$-$V_{16}$) des ponts (22, 24) en moitiés intérieures et extérieures ($V_{1a}$-$V_{6a}$, $V_{1b}$-$V_{6b}$ ; $V_{11a}$-$V_{16a}$, $V_{11b}$-$V_{16b}$) , et l'étape destinée à déconnecter la sortie de courant continu comprenant également l'étape secondaire d'isolation de l'un des ponts et de blocage des moitiés extérieures du pont activé dans un état passif de sorte que les moitiés intérieures du pont activé forment une réactance commandée de thyristor en delta.

**18.** Procédé de conversion d'une installation de courant continu à haute tension pour fonctionner comme un compensateur VAR statique selon la revendication 13, comprenant également l'étape de subdivision de chacune des soupapes ($V_1$-$V_6$, $V_{11}$-$V_{16}$) des ponts (22, 24) en moitiés intérieures et extérieures ($V_{1a}$-$V_{6a}$, $V_{1b}$-$V_{6b}$ ; $V_{11a}$-$V_{16a}$, $V_{-11b}$-$V_{16b}$) et l'étape destinée à déconnecter la sortie de courant continu comprenant également l'étape secondaire de blocage de l'un des ponts dans un état passif et de blocage des moitiés extérieures du pont activé dans un état passif de sorte que les moitiés intérieures du pont activé forment une réactance commandée de thyristor en delta.

**19.** Procédé de conversion d'une installation de courant continu à haute tension pour fonctionner comme un compensateur VAR statique selon l'une quelconque des revendications 13 à 18, comprenant également l'étape de raccordement d'un condensateur commuté par thyristor aux ponts.

**20.** Procédé de conversion d'une installation de courant continu à haute tension pour fonctionner comme un compensateur VAR statique selon l'une quelconque des revendications 13 à 19, l'étape de réduction de la tension d'entrée de l'entrée de courant alternatif comprenant les étapes secondaires de déconnexion des ponts (22, 24) d'un enroulement secondaire d'un transformateur abaisseur fournissant une première tension d'entrée et de connexion des ponts à un enroulement tertiaire du transformateur abaisseur fournissant une seconde tension d'entrée plus basse.

**Fig. 1**

**Fig. 2**

Phase A

Phase B

Phase C

*Fig. 3a*

*Fig. 3b*

*Fig. 4*

*Fig. 5*

*Fig. 6*

EP 1 787 383 B1

*Fig. 7*

Phase notation
A
B
C

*Fig. 8*

*Fig. 9*

EP 1 787 383 B1

*Fig. 10*

Fig. 11

Phase notation
A
B
C

EP 1 787 383 B1

*Fig. 12*

EP 1 787 383 B1

*Fig. 13*

EP 1 787 383 B1